# EUROPEAN PATENT SPECIFICATION

(11) **EP 1 908 248 B1**
(45) Date of publication and mention of the grant of the patent: **02.12.2009**
(21) Application number: 06761165.7
(22) Date of filing: 21.07.2006
(51) Int. Cl.: H04L 29/02, H04L 12/24, H04L 12/16, H04W 84/00

(54) **A METHOD FOR COMMUNICATING STATE INFORMATION BETWEEN A SERVER AND A MOBILE DEVICE BROWSER WITH VERSION HANDLING**
VERFAHREN ZUM ÜBRMITTELN VON ZUSTANDSINFORMATIONEN ZWISCHEN EINEM SERVER UND EINEM MOBILEINRICHTUNGS-BROWSER MIT VERSIONS-HANDHABUNG
PROCEDE PERMETTANT LA TRANSMISSION D'UNE INFORMATION D'ETAT ENTRE UN SERVEUR ET LE NAVIGATEUR D'UN DISPOSITIF MOBILE, AVEC GESTION DES VERSIONS

(30) Priority: 22.07.2005 CA 2513019
(43) Date of publication of application: 09.04.2008
(73) Proprietor: Research In Motion Limited, Waterloo, Ontario N2L 3W8 (CA)
(72) Inventor: KNOWLES, Michael, Waterloo, Ontario N2T 2X5 (CA); TAPUSKA, David, Waterloo, Ontario N2T 2T7 (CA); KALOUGINA, Tatiana, Waterloo, Ontario N2L 5H3 (CA)
(74) Representative: MERH-IP Matias Erny Reichl Hoffmann
(86) International application number: PCT/CA2006/001204
(87) International publication number: WO 2007/009256

(56) References cited:
- EP-A- 1 441 470
- US-A1- 2002 194 382
- US-A1- 2004 177 124
- US-A1- 2005 060 370
- US-A1- 2005 138 176
- US-B2- 6 721 871
- "Wireless markup language specification version 1.1" INTERNET CITATION, [Online] XP002161009 Retrieved from the Internet: URL:http://www1.wapforum.org/tech/document s/SPEC-WML-19990616.pdf> [retrieved on 2001-02-21]
- JIUN-LONG HUANG ET AL: "A QoS-aware transcoding proxy using on-demand data broadcasting" INFOCOM 2004. TWENTY-THIRD ANNUALJOINT CONFERENCE OF THE IEEE COMPUTER AND COMMUNICATIONS SOCIETIES, IEEE, PISCATAWAY, NJ, USA, vol. 3, 7 March 2004 (2004-03-07), pages 2050-2059, XP010740561 ISBN: 978-0-7803-8355-5
- KAHOL ET AL: "A Strategy to Manage Cache Consistency in a Disconnected Distributed Environment" INTERNET CITATION, 1 July 2001 (2001-07-01), pages 686-700, XP002501708 [retrieved on 2001-07-01]

## Description

### Field

This specification relates generally to mobile data communication systems, and more particularly to a method for communicating state information between a proxy server and a mobile Internet browser with version handling.

### Background

Mobile communication devices are becoming increasingly popular for business and personal use due to a relatively recent increase in number of services and features that the devices and mobile infrastructures support. Handheld mobile communication devices, sometimes referred to as mobile stations, are essentially portable computers having wireless capability, and come in various forms. These include Personal Digital Assistants (PDAs), cellular phones and smart phones.

It is known in the art to provide Internet browser functionality in such mobile communication devices. In operation, a browser user-agent in the handheld mobile communication device issues commands to an enterprise or proxy server implementing a Mobile Data Service (MDS), which functions as an acceleration server for browsing the Internet and transmitting text and images to the mobile device for display. Such enterprise or proxy servers generally do not store the state of their clients (i.e. the browser user-agent), or if they do, the state that is stored is minimal and limited to HTTP state (i.e. cookies). Typically, such enterprise or proxy servers fetch and transmit data to the browser user-agent when the browser makes a data request. In order to improve the performance of the browser on the mobile device, some enterprise or proxy servers fetch all the data required in order to fulfill the data request from the browser, aggregate the fetched data, and transmit the data to the device browser. For instance, if a HyperText Markup Language (HTML) page is requested, the enterprise or proxy server fetches any additional files referenced within the HTML page (e.g. Images, inline CSS code, JavaScript, etc.). Since the proxy server fetches all the additional files within the HTML file, the device does not have to make additional data requests to retrieve these additional files. Although this methodology is faster than having the device make multiple requests, the proxy server nonetheless has to send all of the data again if the site is later revisited. This is because the proxy server has no knowledge of the device caches (e.g. caches that are saved in persistent memory, for different types of data such as a content cache to store raw data that is cached as a result of normal browser activity, a channel cache containing data that is sent to the device by a channel or cache push, and a cookie cache containing cookies that are assigned to the browser by visited Web pages). For example, if a user browses to CNN.com, closes the browser to perform some other function (e.g. place a telephone call or access e-mail messages, etc.) and then later accesses the CNN.com Web site (or follows a link from CNN.com to a news story), the banner "CNN.com" will be transmitted from the MDS to the device browser each time the site is accessed, thereby consuming significant bandwidth, introducing delay, etc.

It is known in the art to provide local file caching. One approach is set forth in *GloMop: Global Mobile Computing By Proxy*, published September 13, 1995, by the GloMop Group, wherein PC Card hard drives are used as portable file caches for storing, as an example, all of the users' email and Web caches. The user synchronizes the file caches and the proxy server keeps track of the contents. Mobile applications (clients) are able to check the file caches before asking for information from the proxy server by having the server verify that the local version of a given file is current.

US-A-2005/0138176 discloses a system and method for caching data and verifying cached data using a client-server model and meta-data. A client proxy and server proxy are connected via the internet. In a case in which no prior response data is found in the client proxy cache for a URL requested by the client, the request is sent to the server and the server searches its own cache for the response data for the URL.

### Summary

In general, there is provided a method for communicating state information between a server and a mobile device browser with version handling including:
providing a control channel between the server and mobile device browser;
transmitting at least one message from the mobile device browser to the server over said control channel indicative of browsing-related state data, wherein said at least one message has an Extensible Markup Language 'XML'-encoded document and a protocol version value identifying a version of Document Type Definition 'DTD' against which to validate said XML-encoded document, and wherein said XML-encoded document contains a hash value of data being requested by said mobile device browser, a connection identifier, and information related to the state of said data being requested by said mobile device browser; and
regulating subsequent transmission of data from the server to the mobile device browser based on said at least one message, wherein said regulating subsequent transmission of data comprises comparing said hash value of data being requested by said mobile device browser with a corresponding hash value of said data stored on said server, and comparing said information related to state of said data being requested by said mobile device browser with corresponding information related to state of said information stored on said server, and transmitting said data from said server to said mobile device browser only in the event of one of: a difference between said hash value of said data being requested and said corresponding hash value stored on said server; and a difference between said information related to state of said data being requested and said corresponding information stored on said server;
wherein said information related to the state of said data being requested includes at least one of when said data was last modified and expiration information for said data.

The method set forth herein has specific application to a secure system for communicating information between an enterprise or proxy server and a mobile Internet browser using an HTTP-like protocol, referred to herein as the Browser Session Management (BSM) protocol, that provides a control channel between the proxy server and the mobile device browser, so that the mobile device browser can communicate to the proxy server what data the mobile device browser has cached (from previous browsing). The BSM protocol is an "out of band" protocol in that BSM communications are in addition to the usual stream of HTTP requests from the mobile device browser to the proxy server and provides "metadata" relating to cache contents. This metadata is used by the proxy server when handling subsequent requests from the mobile device browser, to determine what data to send to the mobile device browser, thereby significantly reducing data transfer on subsequent requests relative to the prior art methodology discussed above.

Because the proxy server is aware of what the mobile device browser has stored in its cache, the amount of data sent to the mobile device browser may be reduced, thereby increasing the performance of the mobile device browser and reducing operational cost. For example, if after the first request the CNN.com banner is cached and if the proxy server "knows" that the information has been cached then there will be no need to send the CNN.com banner to the mobile device browser upon subsequent visits to the CNN Web site.

According to another aspect, messages from the device to the proxy server contain hash values of different portions of documents (rather than the actual URLs) which are used by the proxy server to detect state changes in the device and utilize the information in preparing documents for transmission to the device. In another embodiment, the device sends hashes of the actual data of the portions (i.e. the actual image data, JavaScripts, StyleSheets, etc.) and the proxy server compares the received and stored data hashes for the portions to determine if the device already has the data for a particular portion (e.g. previously retrieved with a different URL), in which case the proxy server sends a response to the device with a header that indicates the device already has the data that is to be used for that portion. A person of skill in the art will appreciate that a one-way hash function transforms data into a value of fixed length (hash value) that represents the original data. Ideally, the hash function is constructed so that two sets of data will rarely generate the same hash value. Examples of known hash functions include MD2, MD5 and SHA-1.

According to another aspect, there is provided a communication system, comprising:
a mobile device browser for transmitting over a control channel at least one message indicative of browsing-related state data, wherein said at least one message has an Extensible Markup Language 'XML'-encoded document and a protocol version value identifying a version of Document Type Definition 'DTD' against which to validate said XML-encoded document, and wherein said XML-encoded document contains a hash value of data being requested by said mobile device browser, a connection identifier, and information related to the state of said data being requested by said mobile device browser; and
a server for receiving said at least one message over said control channel and in response regulating transmission of data to the mobile device browser based on said at least one message, wherein said regulating subsequent transmission of data comprises comparing said hash value of data being requested by said mobile device browser with a corresponding hash value of said data stored on said server, and comparing said information related to state of said data being requested by said mobile device browser with corresponding information related to state of said information stored on said server (29), and transmitting said data from said server to said mobile device browser only in the event of one of: a difference between said hash value of said data being requested and said corresponding hash value stored on said server; and a difference between said information related to state of said data being requested and said corresponding information stored on said server;
   wherein said information related to the state of said data being requested includes at least one of when said data was last modified and expiration information for said data.

In contrast to the prior art *GloMop* caching methodology discussed above, the exemplary method set forth herein synchronizes the cache contents when the mobile device browser connects to the proxy server in order to initiate a session and keeps track of changes to the cache via knowledge of what data has been sent to the mobile device browser in combination with state information periodically received from the mobile device browser identifying what has actually been cached. Also, as set forth in greater detail below, the proxy server uses this cache knowledge to determine what to send back to the mobile device browser. In contrast, the prior art *GloMop* methodology does not contemplate sending any state information to the proxy server for identifying what has actually been cached in the device. Moreover, the prior art *GloMop* approach first checks the local cache, and then queries the proxy server to determine whether a particular data item in the cache is current or not. According to the *GloMop* prior art, the proxy server does not use its own knowledge of the mobile device browser cache to determine what to send back to the mobile device browser.

Additional aspects and advantages will be apparent to a person of ordinary skill in the art, residing in the details of construction and operation as more fully hereinafter described and claimed, reference being had to the accompanying drawings.

### Brief Description of the Drawings

A detailed description of the preferred embodiment is set forth in detail below, with reference to the following drawings, in which:

Figure 1 is a block diagram of a communication system for implementing Internet browsing functionality in a mobile communication device;

Figure 2A shows communication protocol stacks for the communication system of Figure 1;

Figure 2B shows communication protocol stacks for a Browser Session Management (BSM) protocol according to an exemplary embodiment;

Figure 3 is a flowchart showing the method for communicating information between a proxy server and a mobile Internet browser, according to the preferred embodiment; and

Figure 4 is a flowchart of an exemplary method according to the present specification.

### Detailed Description

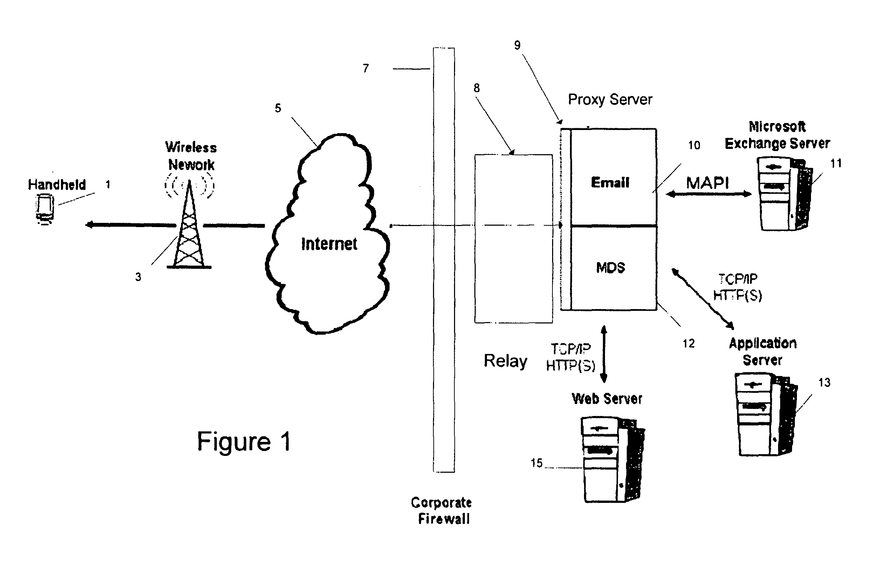

Figure 1 depicts the architecture of a system for providing wireless e-mail and data communication between a mobile device 1 and an enterprise or proxy server 9. Communication with the device 1 is effected over a wireless network 3, which in turn is connected to the Internet 5 and proxy server 9 through corporate firewall 7 and relay 8. Alternatively, the device 1 can connect directly (via the Internet) through the corporate firewall 7 to the proxy server 9. When a new message is received in a user's mailbox within email server 11, enterprise or proxy server 9 is notified of the new message and email application 10 (e.g. Messaging Application Programming Interface (MAPI), MS Exchange, etc.) copies the message out to the device 1 using a push-based operation. Alternatively, an exemplary architecture for proxy server 9 may provide a browsing proxy but no email application 10. Indeed, the exemplary embodiment set forth herein relates to mobile browser device functionality and is not related to email functionality. Proxy server 9 also provides access to data on an application server 13 and the Web server 15 via a Mobile Data Service (MDS) 12. Additional details regarding e-mail messaging, MAPI sessions, attachment service, etc., are omitted from this description as they are not germane. Nonetheless, such details would be known to persons of ordinary skill in the art.

In terms of Web browsing functionality, the device 1 communicates with enterprise or proxy server 9 using HTTP over an IP protocol optimized for mobile environments. In some embodiments, the device 1 communicates with the proxy server 9 using HTTP over TCP/IP, over a variant of TCP/IP optimized for mobile use (e.g. Wireless Profiled TCP), or over other, proprietary protocols. For example, according to the communications protocol of Fgure 2A, HTTP is run over Internet Point-to-Point Protocol (IPPP) and an encrypted Global Messaging Exchange (GME) channel over which datagrams are exchanged to transport data between the device 1 and proxy server 9. The GME datagrams are 64Kbit in size whereas the wireless network 3 can only transport UDP datagrams with payloads up to 1500 bytes. Therefore, a Message Delivery Protocol (MDP) is used to separate the GME datagrams into one or more MDP packets, each of which is less than 1500 bytes (default size 1300 bytes), which are transported over UDP/IP to and from the relay 8 which, in turn communicates with the proxy server 9 via Server Relay Protocol (SRP)/TCP/IP. The MDP protocol includes acknowledgements, timeouts and re-sends to ensure that all packets of the GME datagram are received.

The communication between the device 1 and proxy server 9 is optionally encrypted with an encryption scheme, such as Triple Data Encryption Algorithm (TDEA, formerly referred to as Triple Data Encryption Standard (Triple DES)), as is known in the art. The proxy server 9 enables Internet access, preprocesses and compresses HTML and XML content from the Web server 15 before sending it to the device 1, transcodes content type, stores HTTP cookies on behalf of the device 1, and supports certificate authority authentications, etc.

In response to a request from the device browser, the proxy server 9 retrieves content from Web server 15 and creates a custom document containing both images to be displayed on the device and data in the form of compressed versions of requested portions of the document. The document is preferably of "multi-part" format to improve transmission to and processing efficiency within the device 1. Specifically, in order to display composite Web pages (i.e. pages composed of a main WML or HTML page and one or more related auxiliary files, such as style sheets, JavaScript files, or image files) the device browser is normally required to send multiple HTTP requests to the proxy server 9. However, according to the multi-part generation feature, the proxy server 9 posts all necessary parts of a composite Web page in a single bundle, enabling the browser to download all the required content with a single request. The header in the server response identifies the content as a multi-part bundle (e.g. MultiPurpose Mail Extensions (MIME)/multipart,as defined by RFC 2112, E. Levinson, March 1997).

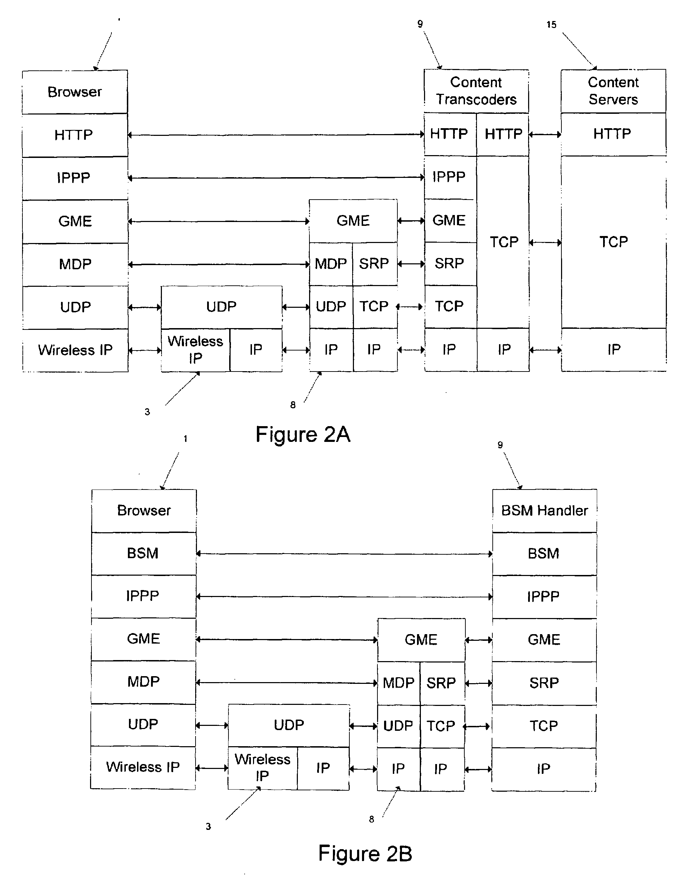

In order to indicate device browser state information to the proxy server 9, three transitional state messages are defined herein, as follows: CONNECT, UPDATE and DISCONNECT, each of which conforms to the exemplary BSM protocol. As shown in Figure 2B, the BSM communications protocol is identical to the protocol of Figure 2A except that the conventional HTTP layer of the protocol stack is replaced by an HTTP-like BSM layer.

The CONNECT transitional message creates a new session with a connection identifier carried in the payload, device information and state data (e.g. current cache and device information) in the form of a set of hash functions for use by the proxy server 9 in preparing a response. Specific care is taken not to identify to the proxy server 9 what cookies or cache entries are contained on the device 1. Only hash values of the state data are sent to the proxy server 9 in order to protect the identity of state data on the device 1.

The CONNECT message also contains a unique authentication key for generating a MAC (Message Authentication Code) using a Hash Message Authentication Code (HMAC) algorithm that incorporates a cryptographic hash function in combination with the authentication key. Each portion of a multi-part document from the proxy server 9 also contains an HMAC, generated using the authentication key, that is used for authenticating the proxy server 9 before adding that portion to the device cache. This prevents a third party from creating its own multi-part document and sending it to the device 1 for injecting cache entries that could be used to extract personal information from the user.

Upon receipt of the CONNECT message, the proxy server 9 uses the state information to regulate or control the transmission of content retrieved from Web server 15 (step 23) to the device 1. One example of an application where this information can be used is when the proxy server 9 is pre-fetching images, inline Cascading Style Sheets (CSS), JavaScript, and the like for an HTML document. If the proxy server 9 already knows that the device 1 has the image, inline CSS, or JavaScript document, there is no need for resending the documents.

The UPDATE transition message notifies the proxy server 9 of changes that have occurred on the device 1 since the last CONNECT message or the last UPDATE message, between the device 1 and proxy server 9 (e.g. new cache entries added because of a push, or invoking the "Low Memory Manager" (LMM) or other memory-space preservation policies on the device and purging items from the cache).

The DISCONNECT transition message notifies the proxy server 9 that the device 1 will no longer send any more messages using the connection identifier specified in the payload. The proxy server 9 can then de-allocate any memory reserved for the connect session between the device 1 and proxy server 9. Upon receiving the disconnect message, the proxy server 9 deletes any session cookies for the device 1 (if it is processing cookies) along with state information. Receiving a request on the identified connection after the DISCONNECT has been received, and before any subsequent CONNECT message has been received, is defined as an error.

Since state is indicated from the device 1 to the proxy server 9, and state may be stored in transient memory within proxy server 9, a mechanism is provided for the proxy server 9 to return to the device 1 a message indicating that the session the device is trying to use is not valid. Once this occurs, the device 1 issues a new CONNECT message and establishes a new session with the proxy server 9, and re-issues the original request.

The data protocol set forth herein is similar to HTTP in order to reduce complexity and to reuse code that already exists for the HTTP protocol. Thus, data transmission according to this protocol begins with a STATE keyword; followed by a BSM (Browser Session Management) protocol identifier and a "Content-Length" header. The end of the "headers" is indicated by a double CRLF (a sequence of control characters consisting of a carriage return (CR) and a line feed (LF)), much like HTTP. After the double CRLF pair (i.e. \r\n) a WBXML (WAP Binary Extensible Markup Language) encoded document is inserted as the message payload. The WBXML document is later decoded using a DTD (Document Type Definition) and codebook, as discussed in greater detail below. The indication of the protocol version refers to what version of the DTD to validate the request against (ie. BSM/1.1 stipulates using version 1.1 of the DTD). It should be noted that WBXML encoding of the contents of BSM messages is set forth to allow for more efficient processing of the BSM message at the device 1, but that in alternate embodiments, the BSM message may be formatted as normal (textual) XML.

The following is an example communication using the protocol according to the preferred embodiment:
CONNECT BSM/1.0\r\n
Content-Length: 40\r\n
\r\n
<WBXML Encoded document of length 40 bytes>
BSM/1.0 200\r\n
r\n

In the foregoing, the first four lines form the CONNECT message from the device 1 to the proxy server 9, and the last two lines are the response from the proxy server 9.

An exemplary XML document, is as follows:

```
 <?xml version="1.0"?>
 <!DOCTYPE bsm PUBLIC "-// DTD BSM 1.0//EN"
      "http://www.something.com/go/mobile/BSM/bsm_1.0.xml">
 <bsm id="2" hmac="12345678901234567890">
 <cache>
 <size>123012</size>
 <entry urlHash="FEEDDEED01" dataHash="FDDEDEED11" etag="SomeEtag"
 expiry="256712323"/>
 </cache>
 <device>
 <version>4.0.1.123</version>
 <memfree>12342342</memfree>
 </device>
 </bsm>
```

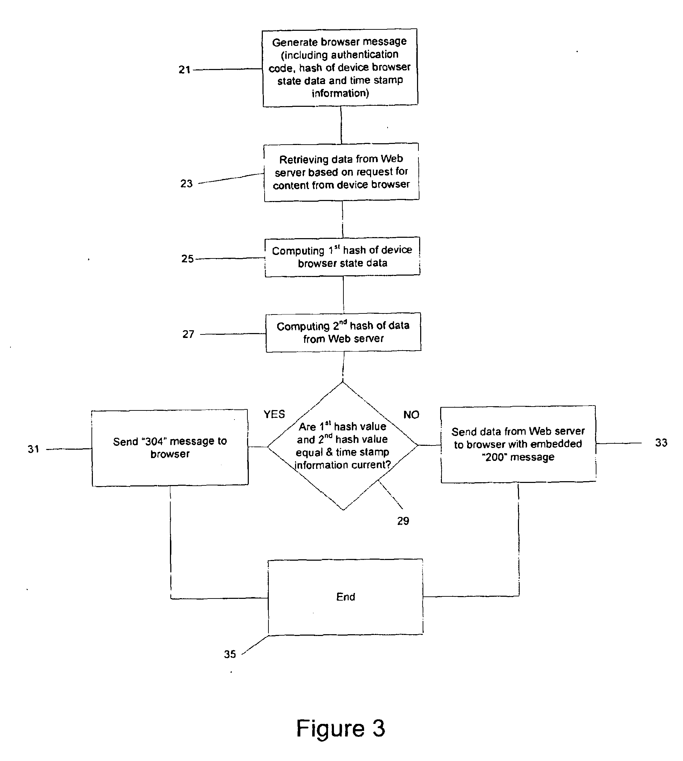

In the example, the state data includes the URL of an HTML page within the device cache. It will be noted that the XML document payload includes a connection identifier (i.e. bsm id="2"), a value indicating when the document was last modified (i.e. etag="SomeEtag"), a page expiry (i.e. expiry="256712323"), and hash values for a URL (i.e. entry urlHash="FEEDDEED01") and a data attribute (i.e. entry dataHash="FDDEDEED11") rather than transmitting the actual URL and data attribute themselves. Thus, as shown in Figure 3, the hashes of the URL and data attribute of the cached page are sent to the proxy server 9 in the CONNECT string (step 21). The proxy server 9 then fetches the requested page from Web server 13 (step 23), computes hashes of device browser state data (step 25) and data from the Web server 13 (step 27), and compares the hashes of the URL and data attribute of the requested page with the hashed URL and data attribute of the cached page, and also compares the time stamps/expiration information (step 29) in order to determine whether the cached page is current. Specifically, in response to the proxy server 9 retrieving a portion from the Web server 13, it computes the dataHash and urlHash of that portion and performs a comparison to the dataHashes and urlHashes of the entries it has saved. There are three cases.

In the first case, if both the dataHash and the urlHash of the retrieved portion match the dataHash and urlHash of a cache entry that the proxy server 9 knows the device 1 has, then the server 13 simply omits this portion from the response, as the device 1 still has a valid entry in its cache.

In the second case, if the dataHash of the retrieved portion matches the dataHash of a cache entry that the proxy server 9 knows the device 1 has, but the urlHash of the retrieved portion does not match the urlHash of that cache entry, the server 13 inlines this updated portion in the combined response to the device 1. However, because the dataHash matches a dataHash of an entry that already exists on the device 1, the inlined response does not include the actual data, but instead only includes a new HTTP header whose value is the new dataHash. When the device 1 receives this inlined portion, it detects the special header, looks for the cache entry with that dataHash, and either creates or updates its cache entry for that URL with the data corresponding to the dataHash by copying that data from the other cache entry (the cache for device 1 is modified to have two indexes, one to retrieve cache entries by URL, the other to retrieve cache entries by dataHash). Finally, if the proxy server 9 already has a cache entry for the urlHash, it updates that entry with the new dataHash; otherwise it creates a new entry for this portion.

In the third case, if the dataHash of the retrieved portion does not match the dataHash of any of the cache entries that the proxy server 9 has received from the device 1 in the BSM messages, then the server inlines the entire portion (headers and new data), since this portion has been updated and the device 1 does not contain the updated value anywhere in its cache.

Although not indicated in Figure 3, it will be appreciated that each inline part to be added to a document to be displayed at the device 1 is fetched. If the response code from the proxy server indicates a "304" (step 31), then the part (i.e., the "304" response) is written as a block in the multipart document. On the other hand, if the proxy server 9 returns a "200" (step 33), then the hash compare operation is performed, and the portion is only included in the multipart document if the hash compare function indicates it is not already on the device 1.

An exemplary DTD, according to the preferred embodiment, is as follows:

```
 <!ELEMENT bsm (cache?, device)>
 <!ATTLIST bsm
     id   NMTOKEN   #REQUIRED
 >
 <!ELEMENT cache (size, (entry)+)>
 <!ATTLIST cache
     action (add|remove|remove_all|quick_add) "add"
 >
 <!ELEMENT entry EMPTY>
 <!ATTLIST entry
     urlHash   CDATA   #REQUIRED
     dataHash   CDATA   #REQUIRED
     etag   CDATA   #IMPLIED
     expiry   NMTOKEN   #IMPLIED
     size   NMTOKEN   #IMPLIED
     last-modified NMTOKEN #IMPLIED
 >
 <!ELEMENT size (#PCDATA)>
 <!ELEMENT device (version, memfree)>
 <!ELEMENT version (#PCDATA)>
 <!ELEMENT memfree (#PCDATA)>
 <!ELEMENT hmac (#PCDATA)>
 Element/Code
 HMAC 12
 Attribute/Code
 size 9 (instead of action)
 lastModified 10
 actionAdd 11
 actionRemove 12
 actionRemoveAll 13
 actionQuickAdd 14
```

Finally, an exemplary codebook, is as follows:

| **Element** | **Code** |
|---|---|
| Session | 5 |
| Cache | 6 |
| Size | 7 |
| Entry | 8 |
| Device | 9 |
| Version | 10 |
| MemFree | 11 |
| HMAC | 12 |

| **Attribute** | **Code** |
|---|---|
| Id | 5 |
| UrlHash | 6 |
| dataHash | 7 |
| ETag | 8 |
| Expiry | 9 |
| Action | 10 |

As is well known in the art, the codebook is used as a transformation for compressing the XML document to WBXML, wherein each text token is represented by a single byte from the codebook.

As discussed above, the proxy server 9 transmits multi-part documents in a proprietary format of compressed HTML, interspersed with data for images and other auxiliary files (which may or may not be related to the main HTML Web page). However, in a departure from conventional HTML, each document part may also include a response code (e.g. "200" for OK, or "304" for "not modified" to indicate that the specified document part has already been cached in the device 1). This may be used for selective downloading of document parts rather than entire documents and for indicating when a part (e.g. image) is about to expire. This is useful, for example, when one Web page links to another page containing one or more common elements.

Of course, certain device requests (e.g. page refresh) will always result in a full document download, irrespective of device state information stored in the proxy server 9.

It is contemplated that the inclusion of response codes may be used by heuristic processes within the proxy server 9 to learn user behaviour and modify downloading of documents based on tracking the history of certain changes reflected in the hash value (e.g. the server 9 may learn to download a certain page (e.g. CNN news) at a particular time each day based the user's history of issuing requests for that page at regular times. As discussed above, because the downloaded documents are multi-part and contain embedded response codes, only those portions of the document that have changed are actually downloaded.

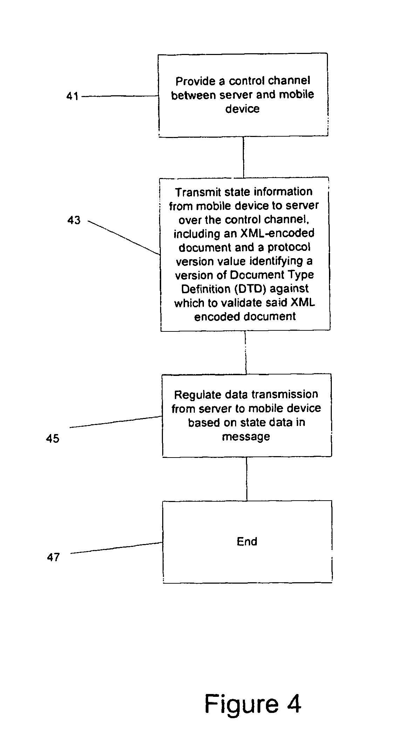

Figure 4 illustrates a broad aspect of the exemplary method for communicating state information, with version handling, between proxy server 9 and a browser operating in mobile device 1. At step 41, a control channel is established between the mobile communication device 1 and proxy server 9. Browser state information is transmitted by the mobile communication device 1 to proxy server 9, including an XML-encoded document and a protocol version value identifying a version of Document Type Definition (DTD) against which to validate said XML-encoded document (step 43). The proxy server 9 thereafter regulates transmission of data to the mobile device 1 based on the state data received from the mobile device browser 1 (step 45). The method then ends (step 47).

As indicated above, the protocol of the preferred embodiment is preferably carried over a proprietary IPPP transport layer, but can also be easily adapted to run over TCP/IP on a specific port. The protocol is preferably implemented as a handler in the proxy server 9, thereby simplifying any currently existing protocol. (e.g. to avoid overloading a current HTTP protocol).

A person skilled in the art, having read this description of the preferred embodiment, may conceive of variations and alternative embodiments. For example, the conditional transfer of data based on communication of state information, as set forth above, may also be applied to separately transmitting individual portions of the multipart document as opposed to transmitting the entire document at once.

In some embodiments, the proxy server 9 uses heuristic algorithms to learn what additional data requests the device may make based on knowledge of the current request, and knowledge of past activity. In some instances, the device may follow a pattern of requesting a first Web page, and then a second Web page. For example, the device may first request the "cnn.com" Web page, and then request the "cnn.com/news" Web page. The proxy server 9 learns this pattern, and whenever the device requests the first Web page, the proxy server 9 determines that the device is likely to then request the second Web page. The proxy server 9 then fetches the second Web page, and uses its knowledge of the data cached on the device 1 (i.e. from the state information transferred to the proxy server 9 during initiation of the present connection) to determine whether the second Web page already exists within the data cached on the device. If so, the proxy server 9 includes information about the second Web page via response codes embedded within the response provided for the first Web page. If the device 1 requires the second Web page, then the device 1 can reference its cache and can avoid having to make a request to the proxy server 9 for the second Web page.

In other embodiments, heuristic processes within the proxy server 9 learn user behaviour and modify downloading of documents based on tracking the history of certain changes reflected in the hash value (e.g. the proxy server 9 may learn to download a certain page (e.g. CNN news) at a particular time each day based the user's history of issuing requests for that page at regular times). As discussed, because the downloaded documents are multi-part and contain embedded response codes, only those portions of the document that have changed are actually downloaded.

All such variations and alternative embodiments are believed to be within the ambit of the claims appended hereto.

## Claims

1. A method for communicating state information between a server and a mobile device browser with version handling, comprising:
providing a control channel between the server and mobile device browser;
transmitting at least one message from the mobile device browser to the server over said control channel indicative of browsing-related state data, wherein said at least one message has an Extensible Markup Language 'XML'-encoded document and a protocol version value identifying a version of Document Type Definition 'DTD' against which to validate said XML-encoded document, and wherein said XML-encoded document contains a hash value of data being requested by said mobile device browser, a connection identifier, and information related to the state of said data being requested by said mobile device browser; and
regulating subsequent transmission of data from the server to the mobile device browser based on said at least one message, wherein said regulating subsequent transmission of data comprises comparing said hash value of data being requested by said mobile device browser with a corresponding hash value of said data stored on said server, and comparing said information related to state of said data being requested by said mobile device browser with corresponding information related to state of said information stored on said server (29), and transmitting said data from said server to said mobile device browser only in the event of one of: a difference between said hash value of said data being requested and said corresponding hash value stored on said server; and a difference between said information related to state of said data being requested and said corresponding information stored on said server;
wherein said information related to the state of said data being requested includes at least one of when said data was last modified and expiration information for said data.

2. The method of claim 1, wherein said at least one message comprises, in sequence: a header representing a transition state message; and a protocol identifier incorporating said protocol version value.

3. The method of claim 2, wherein said header further comprises an indication of content length of said XML-encoded document.

4. The method of claim 2 or claim 3, wherein said header and said XML-encoded document are separated by a sequence of control characters.

5. The method of claim 1, wherein each said subsequent transmission of data from the server contains a message authentication code, MAC, for authentication by the device prior to caching said data within the device.

6. A communication system, comprising:
a mobile device browser for transmitting over a control channel at least one message indicative of browsing-related state data, wherein said at least one message has an Extensible Markup Language 'XML'-encoded document and a protocol version value identifying a version of Document Type Definition 'DTD' against which to validate said XML-encoded document, and wherein said XML-encoded document contains a hash value of data being requested by said mobile device browser, a connection identifier, and information related to the state of said data being requested by said mobile device browser; and
a server for receiving said at least one message over said control channel and in response regulating transmission of data to the mobile device browser based on said at least one message, wherein said regulating subsequent transmission of data comprises comparing said hash value of data being requested by said mobile device browser with a corresponding hash value of said data stored on said server, and comparing said information related to state of said data being requested by said mobile device browser with corresponding information related to state of said information stored on said server (29), and transmitting said data from said server to said mobile device browser only in the event of one of: a difference between said hash value of said data being requested and said corresponding hash value stored on said server; and a difference between said information related to state of said data being requested and said corresponding information stored on said server;
wherein said information related to the state of said data being requested includes at least one of when said data was last modified and expiration information for said data.

7. A computer readable medium storing computer readable instructions executable by a processor of a computing system to cause said system to implement all the steps of the method of any one of claims 1 to 5.

## Patentansprüche

1. Verfahren zum Kommunizieren von Status- bzw. Zustandsinformation zwischen einem Server und einem Browser einer mobilen Vorrichtung mit Versionshandhabung, das aufweist:
Vorsehen eines Steuerungskanals zwischen dem Server und dem Browser der mobilen Vorrichtung;
Übertragen zumindest einer Nachricht von dem Browser der mobilen Vorrichtung an den Server über den Steuerungskanal, die Browsing-betreffende Zustandsdaten anzeigt, wobei die zumindest eine Nachricht ein XML(Extensible Markup Language)-codiertes Dokument und einen Protokollversionswert hat, der eine Version von DTD (Document Type Definition) identifiziert, mit der das XML-codierte Dokument zu validieren ist, und wobei das XML-codierte Dokument einen Hash-Wert aus Daten, die durch den Browser der mobilen Vorrichtung angefordert werden, einen Verbindungsidentifizierer und Information enthält, die den Zustand der Daten betrifft, die durch den Browser der mobilen Vorrichtung angefordert werden; und
Regulieren einer nachfolgenden Übertragung von Daten von dem Server an den Browser der mobilen Vorrichtung basierend auf der zumindest einen Nachricht, wobei das Regulieren einer nachfolgenden Übertragung von Daten aufweist ein Vergleichen des Hash-Werts von Daten, die durch den Browser der mobilen Vorrichtung angefordert werden, mit einem entsprechenden Hash-Wert der Daten, die auf dem Server gespeichert sind, und
Vergleichen der Information, die den Zustand der Daten betrifft, die durch den Browser der mobilen Vorrichtung angefordert werden, mit entsprechender Information, die einen Zustand der auf dem Server (29) gespeicherten Information betrifft, und Übertragen der Daten von dem Server an den Browser der mobilen Vorrichtung nur in einem Fall aus: ein Unterschied zwischen dem Hash-Wert der angeforderten Daten und dem entsprechenden Hash-Wert, der an dem Server gespeichert ist; und ein Unterschied zwischen der Information, die den Zustand der angeforderten Daten betrifft, und der entsprechenden Information, die auf dem Server gespeichert ist;
wobei die Information, die den Zustand der angeforderten Daten betrifft, zumindest eines umfasst aus: wann die Daten das letzte Mal modifiziert wurden und einer Ablaufinformation für die Daten.

2. Verfahren gemäß Anspruch 1, wobei die zumindest eine Nachricht aufweist, in der Reihenfolge: einen Header, der eine Übergangszustandsnachricht repräsentiert; und einen Protokollidentifizierer, der den Protokollversionswert enthält.

3. Verfahren gemäß Anspruch 2, wobei der Header weiter eine Anzeige einer Inhaltslänge des XML-codierten Dokuments aufweist.

4. Verfahren gemäß Anspruch 2 oder Anspruch 3, wobei der Header und das XML-codierte Dokument durch eine Sequenz von Steuerungszeichen getrennt sind.

5. Verfahren gemäß Anspruch 1, wobei jede nachfolgende Übertragung von Daten von dem Server einen Nachrichtenauthentisierungscode MAC (message authentication code) enthält zur Authentisierung durch die Vorrichtung vor einem Cache-Speichern der Daten in der Vorrichtung.

6. Kommunikationssystem, das aufweist:
einen Browser einer mobilen Vorrichtung zum Übertragen über einen Steuerungskanal zumindest einer Nachricht, die Browsing-betreffende Zustandsdaten anzeigt, wobei die zumindest eine Nachricht ein XML(Extensible Markup Language)-codiertes Dokument und einen Protokollversionswert hat, der eine Version von DTD (Document Type Definition) identifiziert, mit der das XML-codierte Dokument zu validieren ist, und wobei das XML-codierte Dokument einen Hash-Wert aus Daten, die durch den Browser der mobilen Vorrichtung angefordert werden, einen Verbindungsidentifizierer und Information enthält, die den Zustand der Daten betrifft, die durch den Browser der mobilen Vorrichtung angefordert werden; und
einen Server zum Empfangen der zumindest einen Nachricht über den Steuerungskanal und, als Reaktion, zum Regulieren einer Übertragung von Daten an den Browser der mobilen Vorrichtung basierend auf der zumindest einen Nachricht, wobei das Regulieren einer nachfolgenden Übertragung von Daten aufweist ein Vergleichen des Hash-Werts von Daten, die durch den Browser der mobilen Vorrichtung angefordert werden, mit einem entsprechenden Hash-Wert der Daten, die auf dem Server gespeichert sind, und Vergleichen der Information, die den Zustand der Daten betrifft, die durch den Browser der mobilen Vorrichtung angefordert werden, mit entsprechender Information, die einen Zustand der auf dem Server (29) gespeicherten Information betrifft, und Übertragen der Daten von dem Server an den Browser der mobilen Vorrichtung nur in einem Fall aus: ein Unterschied zwischen dem Hash-Wert der angeforderten Daten und dem entsprechenden Hash-Wert, der an dem Server gespeichert ist; und ein Unterschied zwischen der Information, die den Zustand der angeforderten Daten betrifft, und der entsprechenden Information, die auf dem Server gespeichert ist;
wobei die Information, die den Zustand der angeforderten Daten betrifft, zumindest eines umfasst aus: wann die Daten das letzte Mal modifiziert wurden und einer Ablaufinformation für die Daten.

7. Computer-lesbares Medium, das Computer-lesbare Anweisungen speichert zur Ausführung durch einen Prozessor eines Computersystems, um das System zu veranlassen, alle Schritte des Verfahrens gemäß einem der Ansprüche 1 bis 5 zu implementieren.

## Revendications

1. Procédé de communication d'informations d'état entre un serveur et un navigateur d'un dispositif mobile offrant la gestion des versions, comprenant les étapes consistant à:
fournir un canal de commande entre le serveur et le navigateur du dispositif mobile;
émettre au moins un message entre le navigateur du dispositif mobile et le serveur sur ledit canal de commande, pour indiquer des données d'état liées à la navigation, dans lequel ledit au moins un message contient un document codé en XML, pour *«Extensible Markup Language» -* langage de balisage extensible, ainsi qu'une valeur de version de protocole identifiant une version d'une définition de type de document, DTD pour *«Document Type Definition»,* au regard duquel doit être validé ledit document codé en XML et dans lequel ledit document codé en XML contient une valeur de hachage des données qui sont demandées par ledit navigateur du dispositif mobile, un identificateur de connexion et des informations liées à l'état desdites données qui sont demandées par ledit navigateur du dispositif mobile; et
réguler les émissions suivantes de données entre le serveur et le navigateur du dispositif mobile sur la base dudit au moins un message, dans lequel ladite régulation des émissions suivantes de données comprend les étapes consistant à comparer ladite valeur de hachage des données qui sont demandées par ledit navigateur du dispositif mobile avec une valeur de hachage correspondante desdites données stockées sur ledit serveur, à comparer lesdites informations liées à l'état desdites données qui sont demandées par ledit navigateur du dispositif mobile avec des informations correspondantes, liées à l'état desdites informations et stockées sur ledit serveur (29), et à émettre lesdites données entre ledit serveur et ledit navigateur du dispositif mobile seulement si une des conditions suivantes est remplie: une différence entre ladite valeur de hachage desdites données qui sont demandées et ladite valeur de hachage correspondante stockée sur ledit serveur et une différence entre lesdites informations liées à l'état desdites données qui sont demandées et lesdites informations correspondantes sur ledit serveur;
dans lequel lesdites informations liées à l'état desdites données qui sont demandées comprennent au moins un élément parmi la date de dernière modification desdites données et des informations d'expiration desdites données.

2. Procédé selon la revendication 1, dans lequel ledit au moins un message comprend successivement un en-tête représentant un message d'état de transition et un identificateur de protocole comprenant ladite valeur de version de protocole.

3. Procédé selon la revendication 2, dans lequel ledit en-tête comprend en outre une indication de la longueur du contenu dudit document codé en XML.

4. Procédé selon la revendication 2 ou la revendication 3, dans lequel ledit en-tête et ledit document codé en XML sont séparés par une séquence de caractères de commande.

5. Procédé selon la revendication 1, dans lequel chacune desdites émissions suivantes de données à partir du serveur contient un code d'authentification de message destiné à permettre une authentification par le dispositif avant le placement desdites données dans une antémémoire du dispositif.

6. Système de communication comprenant:
un navigateur de dispositif mobile, destiné à émettre sur un canal de commande au moins un message pour indiquer des données d'état liées à la navigation, dans lequel ledit au moins un message contient un document codé en XML et une valeur de version de protocole identifiant une version d'une définition de type de document, DTD, au regard duquel doit être validé ledit document codé en XML et dans lequel ledit document codé en XML contient une valeur de hachage des données qui sont demandées par ledit navigateur du dispositif mobile, un identificateur de connexion et des informations liées à l'état desdites données qui sont demandées par ledit navigateur du dispositif mobile; et
un serveur destiné à recevoir ledit au moins un message sur ledit canal de commande et, en réponse, à réguler les émissions de données vers le navigateur du dispositif mobile sur la base dudit au moins un message, dans lequel ladite régulation des émissions suivantes de données comprend la comparaison de ladite valeur de hachage des données qui sont demandées par ledit navigateur du dispositif mobile avec une valeur de hachage correspondante desdites données stockées sur ledit serveur, la comparaison desdites informations liées à l'état desdites données qui sont demandées par ledit navigateur du dispositif mobile avec des informations correspondantes, liées à l'état desdites informations et stockées sur ledit serveur (29), et l'émission desdites données entre ledit serveur et ledit navigateur du dispositif mobile seulement si une des conditions suivantes est remplie: une différence entre ladite valeur de hachage desdites données qui sont demandées et ladite valeur de hachage correspondante stockée sur ledit serveur et une différence entre lesdites informations liées à l'état desdites données qui sont demandées et lesdites informations correspondantes sur ledit serveur;
dans lequel lesdites informations liées à l'état desdites données qui sont demandées comprennent au moins un élément parmi la date de dernière modification desdites données et des informations d'expiration desdites données.

7. Support lisible par ordinateur, stockant des instructions lisibles par ordinateur pouvant être exécutées par un processeur d'un système informatique pour commander audit système d'exécuter toutes les étapes du procédé selon l'une quelconque des revendications 1 à 5.
